# EUROPEAN PATENT APPLICATION

(11) **EP 4 434 324 A1**
(43) Date of publication of application: **25.09.2024**
(21) Application number: 23020154.3
(22) Date of filing: 24.03.2023
(51) Int. Cl.: A01G 3/04, A01G 17/02

(54) **ELECTRIC TRIMMER**

(71) Applicant: B.F.M. S.r.l. di Bertoluzzo Fabrizio & C., 12043 Canale (CN) (IT)
(72) Inventor: Bertoluzzo, Fabrizio, I-12043 CANALE (CN) (IT)
(74) Representative: Garavelli, Paolo

(57) **Abstract**

The invention concerns a trimmer (1) comprising at least operating connection means (3) to at least one agricultural vehicle, at least one cutting unit (5), at least one handling system (6) provided for handling at least the cutting unit (5) with respect to the operating connection means (3) and one or more electric motors (9) suitable for operating the cutting unit (5) and one or more electric pistons (11, 17) suitable for operating the movement system (6) .

## Description

The present invention relates to a completely electric trimmer, intended in particular for pruning vineyards and orchards.

As known, when tending vineyards and orchards, it is necessary periodically to prune the plants (usually when there is excessive growth) to prevent the growth of new shoots from being hindered.

In order to carry out pruning activities in a faster and more practical way, the prior art offers trimmers, usually to be operatively connected to an agricultural vehicle such as a tractor, equipped with one or more cutting bars (typically a cutting bar called "vertical" cutting bar and a cutting bar called "horizontal", "upper" or "topping" cutting bar) with blades with reciprocating or rotary movement to allow the plants to be pruned with precise and clean cuts, in order to also avoid the fraying and tearing of the branches from the plants themselves.

However, known trimmers are typically operated by means of hydraulic, mechanical and/or hybrid systems which still have some disadvantages and technical problems, such as, for example:
- high energy - consumption;
- fuel consumption for their operation;
- high hydro-mechanical consumption;
- need for frequent maintenance;
- increase in atmospheric and soil pollution due to any oil spills;
- inconsistent performance.

Therefore, object of the present invention is solving the aforesaid prior art problems by providing a fully electrically operated trimmer, in particular intended for pruning vineyards and orchards, which allows obtaining the following advantages with respect to prior art trimmers:
- greater energy saving;
- absence of fuel consumption for its own drive;
- absence of hydro-mechanical consumption;
- less need for maintenance;
- reduction of atmospheric and soil pollution in the absence of any oil spills;
- consistent performance.

The above and other objects and advantages of the invention, as will appear from the following description, are achieved with an electric trimmer such as the one described in claim 1. Preferred embodiments and non-trivial variations of the present invention form the subject of the dependent claims.

It is understood that all attached claims form an integral part of the present description.

It will be immediately obvious that innumerable variations and modifications can be made to what has been described (for example relating to shape, dimensions, arrangements and parts with equivalent functions) without departing from the scope of the invention as appears from the attached claims.

The present invention will be better described by some preferred embodiments thereof, provided by way of non-limiting example, with reference to the attached drawings, in which:

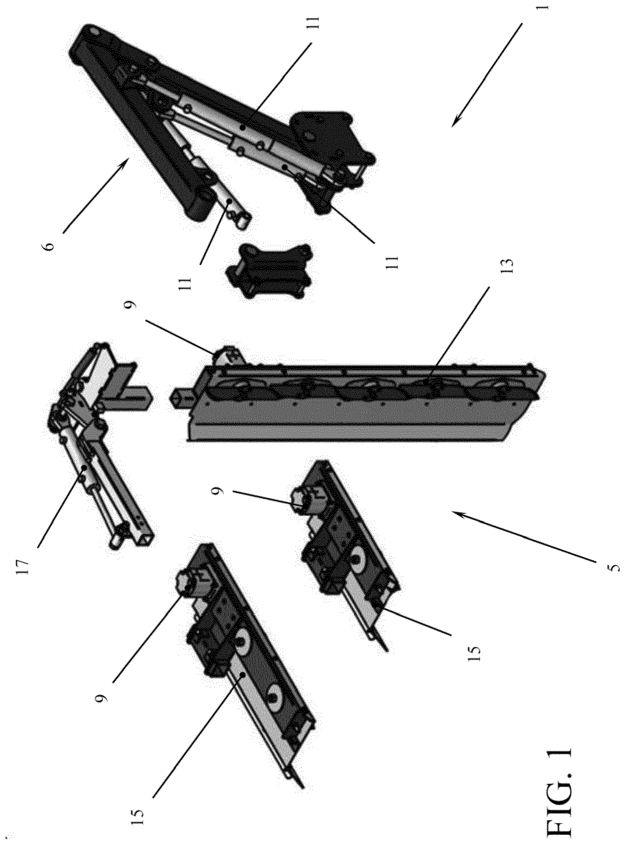

- FIG. 1 shows a partially exploded view of a preferred embodiment of the trimmer according to the present invention;
- FIGS. 2 to 5 show side views of the trimmer of FIG. 1 in various possible and exemplary operating positions.

With reference therefore to the Figures, it can be seen that the trimmer 1 according to the present invention comprises:
- at least operating connection means 3 to at least one agricultural vehicle (not shown);
- at least one cutting unit 5;
- at least one movement system 6 provided for moving at least the cutting unit 5 with respect to the operating connection means 3.

Advantageously, the trimmer 1 according to the present invention comprises one or more electric motors 9 suitable for operating the cutting unit 5 and one or more electric pistons 11, 17 suitable for operating the movement system 6.

In particular, the electric motors 9 and the electric pistons 11, 17 are electrically powered by suitable electric power supply means, preferably from 12V to 48V. In particular, the electric power supply means can comprise one or more electric batteries (not shown) arranged on board the trimmer 1 or the agricultural vehicle to which this trimmer 1 is operationally connected and/or one or more current generators (not shown), these too being able to be arranged on board the trimmer 1 or on the agricultural vehicle.

Preferably, the cutting unit 5 comprises at least one cutting bar.

Even more preferably, the cutting unit 5 comprises at least one first cutting bar 13 (typically defined as a "vertical cutting bar") and at least one second cutting bar 15 (typically defined as a "horizontal, upper or topping cutting bar"): preferably, these first 13 and second 15 cutting bars are, in conventional operation, mutually arranged in such a way as to be longitudinally in substantially orthogonal positions.

Even more preferably, each of these cutting bars 13, 15 is driven by a respective electric motor 9.

Preferably, the movement system 6 of the cutting unit 5 is composed of a synchronized pantograph kinematic system, with geometry and operation substantially known in the art, advantageously actuated by the suitably oriented electric pistons 11.

The movement system 6 can furthermore comprise at least one further electric piston 17 provided to be operatively interposed between the first cutting bar 13 and the second cutting bar 15 in order to modify the longitudinal angle between the bars 13, 15.

Furthermore, the trimmer 1 according to the present invention can comprise suitable control and command means by an operator: for example, these control and command means can comprise at least one control unit and a joystick on board the agricultural vehicle, which therefore allow the operator an easy and correct actuation of the trimmer 1 according to the present invention.

The trimmer 1 according to the present invention can furthermore comprise suitable safety means which allow, for example, a partial or even complete retraction at least of the second cutting bar 15 in the event of a collision.

Therefore, unlike the trimmers known in the art, the present invention proposes a fully electric trimmer capable of solving the technical problems described above.

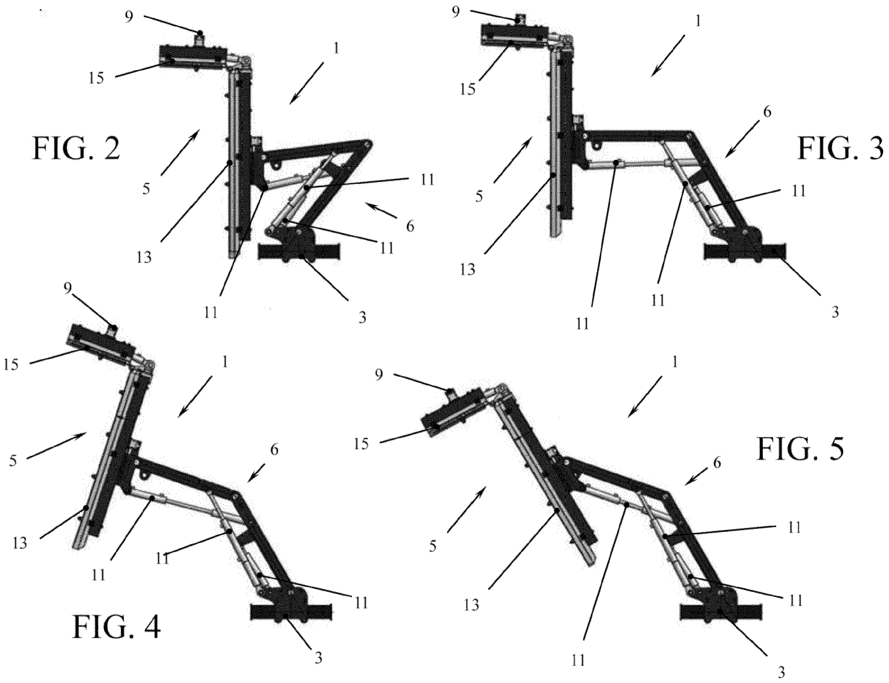

In particular, the trimmer 1 according to the present invention is a bilateral and multi-lateral, multifunctional and multi-equipment agricultural implement applicable, by means of the operating connection means 3 (for example with front or rear ballast attachment) to the agricultural vehicle, complete of the synchronized pantograph movement which allows greater movement, a wide opening and a minimum encumbrance, as can be seen for example in Figures 2 to 5.

The trimmer 1 according to the present invention is therefore, in particular, ideal for green and dry pruning of vineyards and orchards, and allows it to be used on systems both on plains and on slopes.

## Claims

1. Trimmer (1) **characterized in that** it includes:
- at least operating connection means (3) to at least one agricultural vehicle;
- at least one cutting group (5);
- at least one movement system (6) provided for moving at least said cutting unit (5) with respect to said operating connection means (3), and **in that** it comprises one or more electric motors (9) suitable for operating said cutting unit (5) and one or more electric pistons (11, 17) able to operate said movement system (6).

2. Trimmer (1) according to the preceding claim, **characterized in that** said electric motors (9) and said electric pistons (11, 17) are electrically powered by suitable electrical power supply means.

3. Trimmer (1) according to the preceding claim, **characterized in that** said electric power supply means comprise one or more electric batteries arranged on board said trimmer (1) or said agricultural vehicle.

4. Trimmer (1) according to claim 2 or 3, **characterized in that** said electric power supply means comprise one or more current generators arranged on board said trimmer (1) or said agricultural vehicle.

5. Trimmer (1) according to any one of the preceding claims, **characterized in that** said cutting unit (5) comprises at least one cutting bar.

6. Trimmer (1) according to the preceding claim, **characterized in that** said cutting assembly (5) comprises at least one first cutting bar (13) and at least one second cutting bar (15).

7. Trimmer (1) according to the preceding claim, **characterized in that** said first (13) and second (15) cutting bars are, in conventional operation, mutually disposed in such a way as to be longitudinally in substantially orthogonal positions.

8. Trimmer (1) according to any one of the preceding claims, **characterized in that** each of said cutting bars (13, 15) is driven by a respective electric motor (9).

9. Trimmer (1) according to any one of the preceding claims, **characterized in that** said movement system (6) is composed of a synchronized pantograph kinematic mechanism advantageously actuated by said electric pistons (11) .

10. Trimmer (1) according to any one of the preceding claims, **characterized in that** said movement system (6) comprises at least one further electric piston (17) provided to be operatively interposed between said first cutting bar (13) and said second cutting bar (15) in order to modify a longitudinal angle between said bars (13, 15).

11. Trimmer (1) according to any one of the preceding claims, **characterized in that** it comprises control and command means by an operator.

12. Trimmer (1) according to any one of the preceding claims, **characterized in that** it comprises safety means which allow at least a partial or complete retraction of said second cutting bar (15).
